(19) **Europäisches Patentamt / European Patent Office / Office européen des brevets**

(11) **EP 1 353 200 B1**

(12) **EUROPEAN PATENT SPECIFICATION**

(45) Date of publication and mention
of the grant of the patent:
**23.01.2008 Bulletin 2008/04**

(51) Int Cl.:
*G02B 6/34* *(2006.01)*     *G02B 6/12* *(2006.01)*

(21) Application number: **03447088.0**

(22) Date of filing: **09.04.2003**

(54) **Diffraction grating based fibre-to-waveguide coupler for polarisation independent photonic integrated circuits**

Faser-zu-Wellenleiter-Koppler mit Beugungsgitter für polarisationserhaltende optische integrierte Schaltungen

Coupleur fibre-guide d'ondes avec réseau de diffraction pour cirquit intégré photonique à maintien de polarisation

(84) Designated Contracting States:
**AT BE BG CH CY CZ DE DK EE ES FI FR GB GR HU IE IT LI LU MC NL PT RO SE SI SK TR**

(30) Priority: **10.04.2002 GB 0208255**

(43) Date of publication of application:
**15.10.2003 Bulletin 2003/42**

(73) Proprietors:
- **INTERUNIVERSITAIR MICROELEKTRONICA CENTRUM VZW**
  **3001 Leuven (BE)**
- **Universiteit Gent**
  **9000 Gent (BE)**

(72) Inventors:
- **Taillaert, Dirk**
  **8450 Bredene (BE)**
- **Baets, Roel**
  **9800 Deinze (BE)**

(74) Representative: **Bird, William Edward et al**
**Bird Goën & Co.**
**Klein Dalenstraat 42A**
**3020 Winksele (BE)**

(56) References cited:
**WO-A-02/14913**     **US-B1- 6 198 860**
**US-B1- 6 310 991**

- **PATENT ABSTRACTS OF JAPAN vol. 2002, no. 06, 4 June 2002 (2002-06-04) -& JP 2002 062554 A (NIPPON TELEGR & TELEPH CORP), 28 February 2002 (2002-02-28)**
- **MEKIS A ET AL: "TAPERED COUPLERS FOR EFFICIENT INTERFACING BETWEEN DIELECTRIC AND PHOTONIC CRYSTAL WAVEGUIDES" JOURNAL OF LIGHTWAVE TECHNOLOGY, IEEE. NEW YORK, US, vol. 19, no. 6, June 2001 (2001-06), pages 861-865, XP001116050 ISSN: 0733-8724**

## Description

## Technical field of the invention

This invention relates to integrated optical components and methods of operating the same. In particular, it concerns an integrated optical fibre to waveguide coupler with polarisation splitting based on a 2-dimensional diffraction grating structure and methods of operating the same.

## Background of the invention

Integrated optic devices are well suited to applications in such technologies as telecommunications, instrumentation, signal processing and sensors. A photonic integrated circuit uses optical waveguides to implement devices, such as optical switches and couplers and wavelength (de)multiplexers. A waveguide is usually referred to as a solid dielectric light conductor. Light waveguides are fabricated on a substrate very much the way a semiconductor chip is made. Waveguides efficiently transmit light around the optical circuit and connect to external optical waveguides such as optical fibres, generally butt-coupled to the device. However, a mode mismatch exists between the integrated waveguide and the optical fibre. Specifically, because the difference of the refractive index between the core and cladding of a typical waveguide is higher than that of a typical optical fibre, the optical field is more confined in the waveguide than in the fibre.

In addition, waveguide core dimension is smaller than the fibre core dimension. Therefore, directly butt-coupled devices present 7-10 dB insertion loss. However for high index contrast waveguides that can be used for dense integrated optics this insertion loss is as high as 23 dB because of the smaller dimensions. The insertion loss of an optic coupler is the ratio of output to input light power at a particular wavelength.

Therefore, coupling a cylindrical beam from a fibre into a planar (essentially rectangular) waveguide structure and back is an enormous challenge.

The use of non-integrated solutions such as lensed fibres, can enhance the coupling efficiency but requires very critical sub-micron alignment. A better solution is the use of integrated spot-size converters. The lateral in-plane spot-size conversion can be realised with tapered ridge waveguides, but for vertical spot-size conversion more complicated structures are required.

A solution for the vertical spot-size conversion problem is the use of a grating coupler to couple light from an out-of-plane fibre to a planar waveguide. Grating couplers using 1-dimensional gratings (grooves) have been extensively studied, both theoretically and experimentally, see R.M. Emmons, D.G. Hall, "Buried-oxide silicon-on-insulator structures: waveguide grating couplers", IEEE J. Quantum Electron., vol. 28., pp164-175, Jan 1992; and D. Taillaert, W. Bogaerts, P. Bienstman, T.F. Krauss, P. Van Daele, I. Moerman, S. Verstuyft, K. De Mesel, R. Baets, "An out-of-plane grating coupler for efficient butt-coupling between compact planar waveguides and single-mode fibres", IEEE J. Quantum Electron., vol. 38, pp. 949-955, July 2002.

However, existing grating couplers such as described in "Highly directional grating outcouplers with tailorable radiation characteristics" by N. Eriksson, M. Hagberg, A. larsson, IEEE J. Quantum Electron., vol. 32, no. 6, 1996, p. 1038-1047, have a narrow bandwidth, use a long grating (> 100 $\mu$m) and work for only one polarisation, and are therefore not suited for coupling to photonic integrated circuits. A coupler with improved bandwidth and shorter coupling length is disclosed in "A high-efficiency out-of-plane fibre coupler for coupling to high index contrast waveguides", D. Taillaert, W. Bogaerts, P. Bienstman, T. Krauss, I. Moerman, P. Van Daele, R. Baets, Proceedings 27th European Conference on Optical Communication, 30 September - 4 October 2001, Amsterdam, The Netherlands, post-deadline paper Th.F. 1.4., p. 30-31. This coupler uses a high refractive index contrast periodic structure, also known as photonic crystal, instead of a long grating.

A second issue is the polarisation dependence of photonic integrated circuits. Because the state of polarisation of light in a standard single mode fibre can change, the integrated circuit needs to perform polarisation independent operation. Making a large scale photonic integrated circuit polarisation independent is difficult and for some optical functions impossible.

A possible solution is the use of a polarisation splitter. Such a device, as described e.g. in EP-0738907, splits the two polarisations into two different waveguides. But one still needs two different waveguides and circuits for two different polarisations. A polarisation converter would solve this problem, but these devices are large and not suited for integrated optics.

US 6,198,860 describes a photonic crystal resonator system positioned at the cross-section of two waveguides and allowing to reduce the cross-talk between signals propagating in the different waveguides. JP2002062554 describes a photonic crystal optical controller at a crossing region of two orthogonally crossed waveguides. The document describes the use of refractive index modulation to provide a fast coupling between the waveguides. WO 02/14913 describes the use of a planar photonic crystal structure for coupling light between different waveguides crossing each other. The photonic crystal structure is adapted such that it allows switching light coupling between different waveguides. The systems described in these documents refer to light coupling between waveguides positioned in a single plane.

US 2002/0008215 A1 describes the use of an outcoupling grating for coupling light out from a laser, more specifically from a laser cavity. In a specific embodiment, outcoupling light from two orthogonally positioned laser cavities using an outcoupling grating is described. Outcoupling thereby may occur towards an optical fibre.

## Summary of the invention

This invention aims to provide a compact structure, preferably with good coupling efficiency and alignment tolerances, and that can couple light from a fibre with at least one polarisation (e.g. TE and TM) into integrated optical waveguides.

The above objective is accomplished by a method and device according to the present invention.

In the integrated optical waveguides the polarisation are the same (e.g. TE in two integrated optical waveguides). Thus, the invention provides a structure to make polarisation independent photonic integrated circuits even if the waveguides and devices used in these circuits are polarisation selective.

The invention can be summarised as a coupler with an optical grating structure, such as e.g. a diffraction grating, or more generally a waveguide coupler. A diffraction grating structure can be a periodic, an essentially or substantially periodic or a non-periodic structure. The diffraction grating structure used according to the present invention preferably has less than 200 periods, preferably less than 100 periods, more preferred less than 70 periods still more preferred only a few tens of periods, like 20 or 30 periods. The diffraction grating structure can be used for coupling between a single-mode optical fibre, i.e. an optical fibre whose core is sufficiently narrow so that only two orthogonal polarised waveguide modes can propagate, and planar waveguides. The diffraction grating structure may be a grating.

The diffraction grating structure may be a photonic crystal. A photonic crystal is a high refractive index contrast periodic structure. A photonic crystal is thus a periodic structure of which the refractive index is periodic, and the periodicity is of the order of the wavelength of light such that it influences diffraction of light. For example when using light with a wavelength of 1550 nm, a periodic structure with a period of 600 nm may be used.

A diffraction grating structure, e.g. a 2-dimensional photonic crystal, for example, approximately 10 mu m x 10 mu m in area, can be formed at the intersection of two waveguides, for example two wide ridge waveguides. These waveguides can be connected to integrated optical circuits using lateral spot-size converters. The diffraction grating structure, e.g. the photonic crystal, can couple the light between an out-of-plane fibre and the planar ridge waveguides, and the overall coupling efficiency is independent of the polarisation of the light in the fibre.

Accordingly, in one aspect, the present invention provides a waveguide coupler, comprising: a substrate; two waveguides formed on said substrate and intersecting at a right angle; and a diffraction grating structure formed at the intersection of said waveguides, characterised in that it is adapted for coupling an optical fibre to said waveguide coupler and for receiving an optical signal from said optical fibre, said diffraction grating structure being adapted for splitting the optical signal into a first mode and a second mode and for introducing said first mode and said second mode in separate waveguides so that both modes propagate as the first mode or as the second mode in both waveguides.

The diffraction grating structure can be a 2-dimensional grating. The 2-dimensional grating may comprise a periodic refractive index modulator, e.g. an array of diffracting microscopic structures such as an array of holes or an array of rods.

The substrate may have an additional stack of layers forming a substrate reflector under at least one of said waveguides. The substrate reflector may comprise a distributed Bragg reflector (DBR).

The waveguides may be ridge waveguides, which may be tapered.

The coupler may furthermore comprise a slab waveguide horizontally formed on the substrate. The slab waveguide may have a layer with lower refractive index on top.

The diffraction grating may be a 2-dimensional photonic crystal with square lattice.

The diffraction grating may be a purely or substantially periodic grating structure. Alternatively, the diffraction grating may not be a purely periodic grating structure, for example the holes in the array of the diffraction grating may have a different area.

The waveguides may be coupled to integrated optical circuits using lateral spot-size converters.

The optical fibre may be an out-of-plane fibre. The optical fibre may be a single-mode optical fibre. The coupler may couple orthogonal modes from a single-mode optical fibre into identical modes of the two waveguides.

The present invention also provides a photonic integrated circuit comprising a waveguide coupler according to the present invention. In the photonic integrated circuit, the optical fibre may be butt-coupled to the waveguide coupler and the optical fibre axis may be perpendicular to or tilted with respect to the photonic integrated circuit. The photonic integrated circuit furthermore may comprise a waveguide coupler adapted for generating an optical output signal to an output optical fibre whereby a transmission from said received optical signal to said optical output signal may be independent on the polarisation of said received optical signal.

The present invention furthermore provides a method for coupling an optical signal having a first mode, e.g. TE, and a second mode, e.g. TM, in an optical transmission element. The method comprises splitting the optical signal into the first and the second mode on a diffraction grating structure at an intersection of a first and a second waveguide; and introducing the first mode, e.g. TE, and the second mode, e.g. TM, in the first and second waveguides so that both modes propagate as the first mode or as the second mode, e.g. both propagate as TE or both propagate as TM, in both waveguides.

How the present invention may be put into effect will now be described with reference to the appended diagrammatic drawings. Obviously, numerous variations and modifications can be made without departing from the spirit of the present invention. Therefore, it should be clearly understood that the form of the present invention is illustrative only and is not intended to limit the scope of the present invention.

The dependent claims define individual embodiments of the present invention.

**Brief description of the drawings**

The features of the invention will be better understood by reference to the accompanying drawings, which illustrate, by way of example, preferred embodiments of the invention. The reference figures quoted below refer to the attached drawings. In the drawings:

FIG. 1 shows a schematic top view of a) a grating coupler in a single waveguide, b) a grating coupler used as a polarisation splitter according to an embodiment of the present invention and c) a waveguide with a grating coupler at both ends.

FIG. 2 is a plan view of an embodiment of a photonic coupler in accordance with an embodiment of the present invention

FIG. 3 is a cross-section of an embodiment of a coupler according to the present invention taken along line AA' of FIG. 2

FIG. 4 is a schematic drawing (not to scale) of a polarisation independent photonic integrated circuit with input and output couplers according to an embodiment of the present invention.

FIG. 5 is a scanning electron microscopy (SEM) top view of a square array of holes according to an embodiment of the present invention, with a lattice period of 580 nm.

FIG. 6 illustrates measurement of the extinction ratio between output 1 and 2. The difference between the two curves is caused by losses in the 90 degree bend in waveguide 2 (See FIG. 1.B).

Fig. 7 is a graph of measured output power in function of wavelength.

Fig. 8 is a graph of measured fibre-to-fibre transmission on a waveguide with a grating coupler at both ends, as in FIG. 1.C.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

It is well known, for example from E.G. Neumannn, "Single-mode fibres - fundamentals", Berlin Heidelberg : Springer-Verlag, 1988, ch. 5, that a single-mode fibre can carry two orthogonal linearly polarised modes. When launching light into the fibre, the total field will be in an elliptical state of polarisation. Also the state of polarisation changes during propagation in a real fibre due to polarisation mode dispersion.

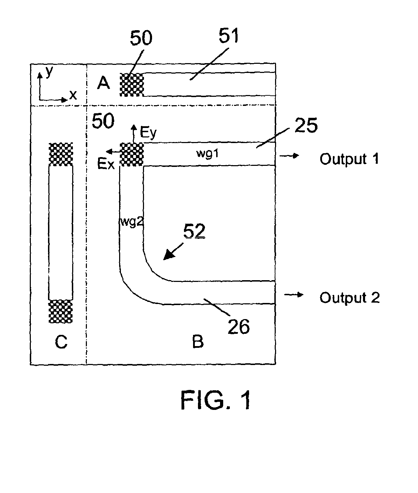

In accordance with an embodiment of the present invention a grating coupler 50 comprising a 2-D grating (FIG. 1.A) etched in a ridge waveguide 51 is provided. A grating is an optical device consisting of a periodic pattern of grooves, channels or cavities or holes. If the periodic pattern is in one direction only, the grating is a linear (one-dimensional or 1-D) grating; if the periodicity is in two (usually orthogonal) directions, it is a two-dimensional (2-D) grating. The present invention includes the use of periodic and non-periodic gratings.

In general the coupling efficiency from an optical fibre to a waveguide is polarisation dependent. For the waveguides and gratings used according to the present invention, the coupling efficiency for TE may be much larger than the coupling efficiency for TM. The coupling from a fibre to a waveguide as in FIG. 1A will be maximum if the input is linearly polarised in the y direction, i.e. perpendicular to the input of the waveguide (see FIG. 1).

The structure of FIG. 1.B comprises two ridge waveguides wg1, wg2 that are orthogonal with respect to each other at their intersection. A 2-D grating 50 is applied to, e.g. etched into, the crossing of the waveguides wg1, wg2 and is invariant for a 90 degree rotation. Light from the fibre (not represented in FIG. 1.B) with linear polarisation with electric field Ey will couple to waveguide wg1 and the other polarisation with electric field Ex will couple to waveguide wg2. In general, elliptically polarised light from a single mode fibre will couple both to waveguides wg1 and wg2. The coupling ratio, i.e. the ratio of the output powers in each of the two waveguides wg1 and wg2, depends on the state of polarisation, but the coupling to wg1 and wg2 together is independent of it. The 90 degree bend 52 in waveguide wg2 is only used for practical reasons (to have the two outputs at the same cleaved facet).

The working principle above has been described as input coupler, but the 2-D grating device 50 can also be used as output coupler, i.e. to couple light from a waveguide into an optical fibre.

There is an important difference between conventional polarisation splitters described in literature, e.g. in J. Van der Tol, J.W. Pedersen, E.G. Metaal, J. Van Gaalen, Y.S. Oei, F.H. Groen, "A short polarization splitter without metal overlays on InGaAsP-InP," IEEE Photonics Tech. Lett., vol.9, pp. 209-211, Feb. 1997, and a coupler used as a splitter according to the present invention. In a conventional splitter, the input light is split in a TE and a TM waveguide mode, which each are propagated through different but parallel waveguides. In a device according to the present invention, the light from a fibre is split into two orthogonal waveguide modes, which each are propagated through one of two orthogonal waveguides. As the waveguides are orthogonal, in the two waveguides the same polarisation direction (e.g. TE) is used, and therefore the device can be useful to make polarisation insensitive photonic integrated circuits, using waveguides which are very strongly polarisation sensitive.

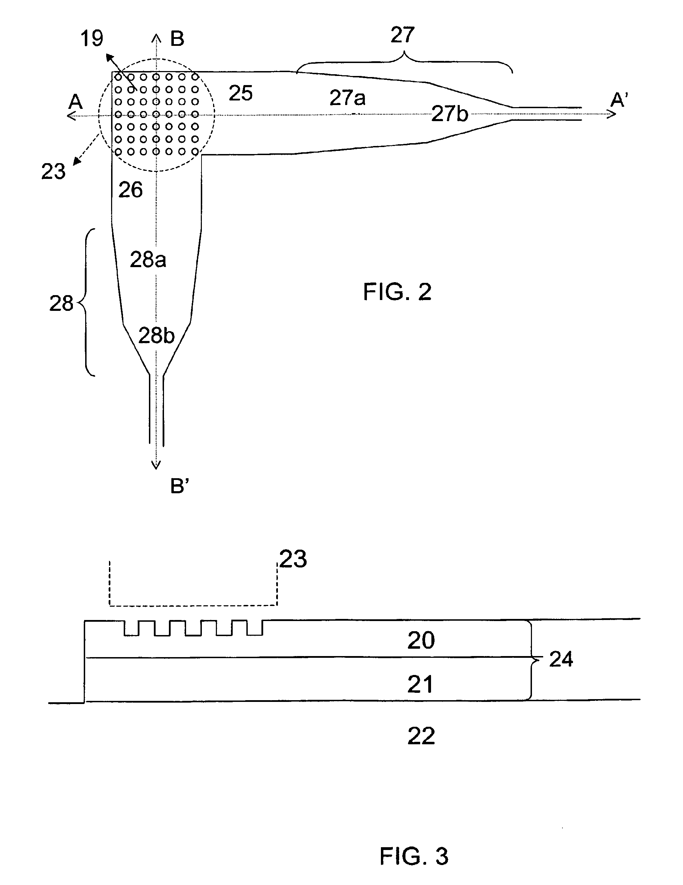

In FIG. 2 there is shown schematically a plan view of an embodiment of a photonic coupler according to the present invention. A 2-D grating structure such as a photonic crystal 19 is formed in the intersection of two ridge waveguides 25 and 26, formed in a slab waveguide 24 (not represented in FIG. 2, but represented in FIG. 3) on a substrate (not represented in FIG. 2, but represented in FIG. 3). In this preferred embodiment, said slab waveguide 24 comprises a core layer 20 and a cladding layer 21 on top of a substrate 22, as shown in FIG. 3. The slab waveguide 24 is a layer structure or layer stack in which a ridge waveguide is created by removing, e.g. by etching away, some parts of these layers to create a waveguide with a finite width. FIG. 3 is a cross section along line AA' in FIG. 2. The refractive index of the core layer 20 is higher than the refractive index of the cladding layer 21. In a preferred embodiment the core layer 20 and the substrate 22 are GaAs with a refractive index of 3.37 and the cladding layer 21 is $AlO_x$ (oxidised AlGaAs) with refractive index of 1.6. This $AlO_x$ may be obtained by wet thermal oxidation of a high (94%) Al-content AlGaAs layer. The thickness of the core layer 20 is 240 nm and the thickness of the cladding layer 21 is 740 nm.

According to embodiments of the present invention, a photonic crystal is a high refractive index contrast periodic structure. A photonic crystal can be an artificially made structure. It can be an imposed structure of diffracting elements such as rods and/or holes. For example a photonic crystal may be made of tiny bars lined up at regular distances and angles. Material from which a photonic crystal may be made, may for example be silicon coated with a polymer.

The photonic crystal 19 of the embodiment described with regard to FIG. 2 is for example a 2D photonic crystal which consists of a square lattice of holes (the two directions of periodicity are perpendicular to each other). The photonic crystal is a so-called second order photonic crystal: the period or lattice constant of the photonic crystal is $\lambda/n_{eff}$ where $\lambda$ is the free space wavelength and $n_{eff}$ is an average effective refractive index in the photonic crystal area. In this preferred embodiment the photonic crystal is designed for a free-space wavelength of 1.55 $\mu$m. In this embodiment the photonic crystal period is 580 nm and the diameter of the circular holes is 340 nm and the etch depth of the holes is 80 nm. Therefore the photonic crystal is a square 18x18 array of holes.

In the preferred embodiment, the single-mode fibre is butt-coupled to the coupler device and the fibre axis is perpendicular to the plane of the photonic integrated circuit. In FIG. 2 the core 23 of the optical fibre is schematically shown as a dashed line. In FIG. 3 the core 23 of the fibre is schematically shown as a dashed line. In some circumstances, such as for example to avoid unwanted reflection into the fibre, it may be desirable to tilt the fibre and thus place the fibre axis under a certain angle with respect to the direction perpendicular to the plane of the photonic integrated circuit.

Because the photonic crystal 19 is only approximately 10 $\mu$m long, calculations based on perturbation theory or grating theory for infinitely long gratings does not provide accurate results. Therefore, the photonic crystal parameters for this preferred embodiment have been calculated and optimised with rigorous electromagnetic simulations based on eigenmode expansion and propagation method and finite difference time domain method.

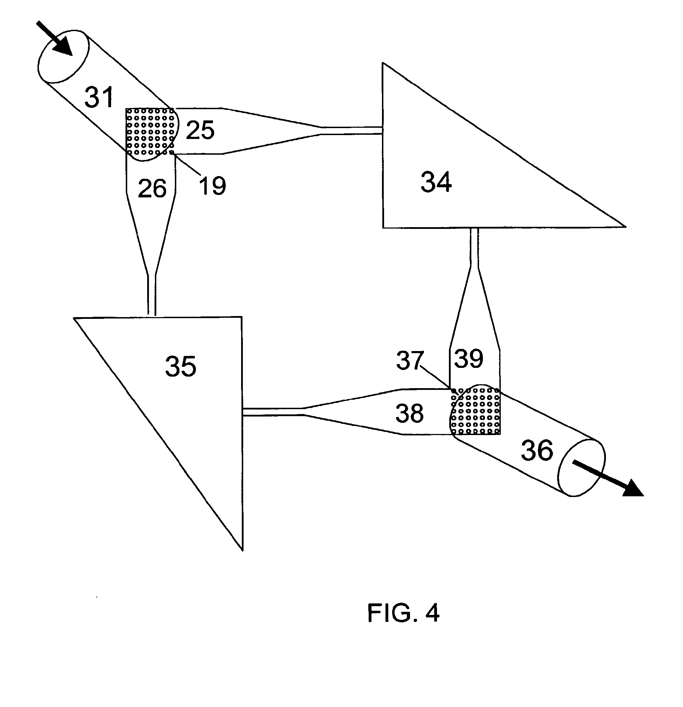

The coupler according to the present invention operates as follows. When a waveguide mode, for example the transverse electric (TE) or the transverse magnetic (TM) mode, is incident on the diffraction grating structure 37 (see FIG. 4), the first order diffraction of the diffraction grating structure 37 creates an upward and downward propagating field. The upward propagating field couples to the optical fibre 36, which is placed above the diffraction grating structure 37. The coupling efficiency is defined as the power in the optical fibre 36 divided by the incident power in the waveguide 38, 39. The directivity is defined as the upward propagating power divided by the downward propagating power. The thickness of the waveguide layers core layer 20 and cladding layer 21 (FIG. 3) in this embodiment is chosen to maximise the directivity and coupling efficiency. At the interface of cladding layer 21 and substrate 22, part of the downward propagating wave is reflected upwards. This second upward wave increases the coupling efficiency if it interferes constructively with the first upward propagating wave. The phase difference between the first and the second upward wave is proportional to the thickness of cladding layer 21.

The coupling efficiency for this preferred embodiment is approximately 30%, or the coupling loss is 5 dB. This coupling efficiency is the coupling efficiency for the fundamental TE-mode of the waveguide. The coupling efficiency for the TM mode is negligible. (TE-TM extinction ratio > 20 dB).

The coupling efficiency is the coupling efficiency in the case of optimal alignment between optical fibre 36 and diffraction grating coupler 37. A deviation of 2 $\mu$m in the direction AA' or BB' in FIG. 2 will result in an additional coupling loss of less than 1 dB.

Although a purely periodic photonic crystal is used in the above preferred embodiment, it may be desirable under some circumstances to use a more complicated photonic crystal, or more generally a more complicated diffraction grating structure, to achieve a higher coupling efficiency. For example, the diffraction grating structure does not need to be perfectly periodic. Such structures include, but are not limited to: varying the hole diameter or etch depth along AA' and BB', tilting the axis of the cylindrical holes (also known as blazed grating) or adding a first order photonic crystal reflector behind the second order coupler section.

It may also be desirable to increase the directivity and coupling efficiency by adding a distributed Bragg reflector (DBR) (not represented) under the waveguide 25, 26, 38, 39. This DBR will reflect almost all the downward propagating light upwards and increase the coupling efficiency if the thickness of the layers is chosen properly. An optimised layer structure, materials and corresponding thicknesses, is shown in table 1.

Table 1

| Thickness (nm) | Material |
| --- | --- |
| 240 | GaAs |
| 760 | $AlO_x$ |
| 115 | GaAs |
| 240 | $AlO_x$ |
| 115 | GaAs |
| 240 | $AlO_x$ |
| Substrate | GaAs |

The width of waveguides 25 and 26 can be 10 $\mu$m to form a 10 $\mu$m x 10 $\mu$m coupling area to butt-couple to a single-mode fibre 31. At the other end, the waveguides 25 and 26 are connected to an optical integrated circuit 34, 35 using lateral spot-size converters 27 and 28. Said spot-size converters 27, 28 convert the fundamental TE-mode of a 10 $\mu$m ridge waveguide to the TE-mode of a single-mode ridge waveguide, which is 0.5 $\mu$m wide in this embodiment. In this embodiment piecewise linear tapered waveguides are used. A first section 27a is a 200 $\mu$m long linear taper which is 10 $\mu$m wide at one end and 4 $\mu$m at the other end. A second section 27b is a 30 $\mu$m long linear taper which is 4 $\mu$m wide at one end and 0.5 $\mu$m at the other end. Spot-size converter 28 is analogous to spot-size converter 27.

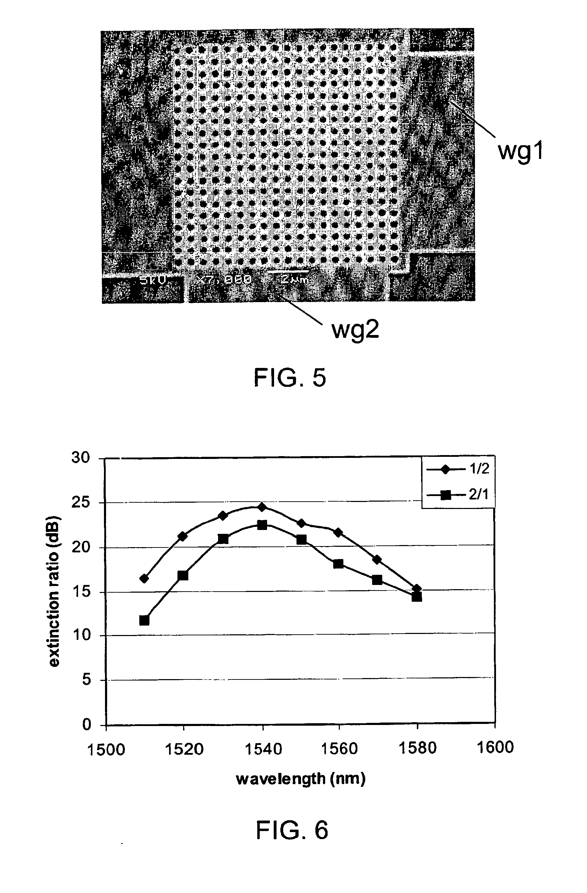

As a further embodiment, structures according to the present invention were fabricated on SOI wafers with a top silicon film thickness of 220 nm and a buried $SiO_2$ layer thickness of 1 $\mu$m. Gratings and waveguides were defined using electron beam lithography and reactive ion etching. An SEM top view is shown in FIG. 5. The diffraction grating structure is a square array of holes, the etch depth is 90 nm and the lattice period 580 nm. Different hole diameters were fabricated and the optimum hole diameter for this implementation seemed to be 300 nm. The ridge waveguides are 10 $\mu$m wide. A 90 degree bend is inserted in one of the waveguides wg2 to be able to detect both outputs at one cleaved facet, as illustrated in FIG. 1.B.

The structures from FIG. 1.B have been used to measure the extinction ratio and check the polarisation of the light in the waveguides. The extinction ratio is the ratio of the low, or OFF optical power level ($P_L$) to the high, or ON optical power level ($P_H$):

$$\text{Extinction Ratio (\%)} = (P_L/P_H) \times 100.$$

A vertically positioned optical fibre couples light from a tunable laser into the waveguides wg1, wg2 via the grating 50. The output power of waveguides wg1 and wg2 has been detected at the cleaved facet using a 40x objective and a power detector.

A first step is alignment of the optical fibre. To make sure that the centre of the fibre is aligned with the centre of the grating 50, the y-position is optimised using output 1 and the x-position using output 2. The optimisations in the x and y-directions is done so that the outputs output 1 and output 2 are maximal. The height of the optical fibre above the sample is approximately 10 $\mu$m.

After the initial alignment, the position of the optical fibre is fixed and only the polarisation and wavelength of incoming light are changed during the further measurements. The polarisation of the input light is changed using a Lefevre type polarisation controller to maximise output 1 or output 2. Then the extinction ratio between the 2 outputs is measured for both cases. The extinction ratio is shown in FIG. 6 for different wavelengths. The extinction ratio is better than 18 dB in the wavelength range 1530-1560 nm. The difference between the 2 cases ($P_L/P_H$ = 1/2 and $P_L/P_H$ = 2/1) is caused by radiation losses in the 90 degree bend in the second waveguide wg2.

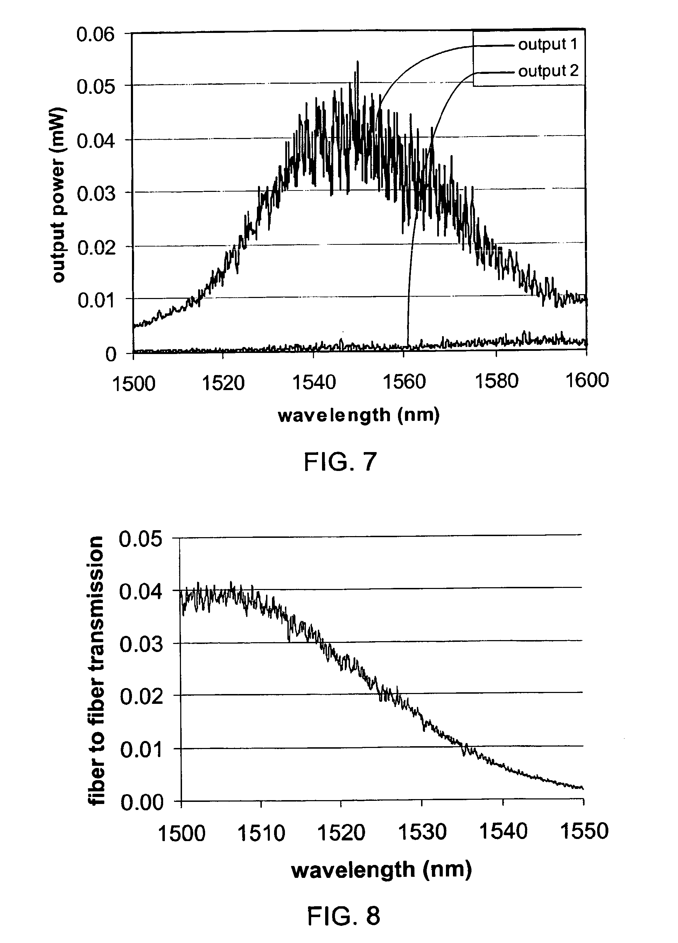

Also the polarisation of the light in the waveguides wg1, wg2 has been verified. The output power versus wavelength for the case when output 1 is maximised is shown in FIG. 7. The fringes in these curves are caused by a cavity between the grating and a cleaved facet.

It is not straightforward to determine the coupling efficiency from the power detected at the cleaved facet because of the facet reflectivity and the high numerical aperture of the waveguides. Therefore, the coupling efficiency is estimated from a transmission measurement from fibre to waveguide to fibre on a structure consisting of a waveguide with a grating coupler at both ends (FIG. 1.C). In this measurement, the optical fibres are tilted slightly to shift the wavelength out of the second order grating reflection peak and thus avoid cavity effects between the two gratings. The fibre to fibre transmission is 4% for TE-polarisation, so the coupling efficiency is 20% if account is taken of the fact that the coupling from fibre to waveguide is the same as from waveguide to fibre. A graph of the fibre to fibre transmission is represented in FIG. 8.

The invention can be used to couple light from optical fibre to waveguide or from waveguide to optical fibre. The light from the optical fibre with transversal E-field parallel to BB' (see FIG. 2) is coupled into waveguide 25, in particular, it couples to the fundamental TE-mode in waveguide 25. The light from the optical fibre with transversal E-field parallel to AA' is coupled into waveguide 26 (TE-mode in the waveguide). The amount of light coupled in waveguide 25 or waveguide 26 will be dependent on the polarisation of the light in the fibre. Said photonic crystal coupler will act as a polarisation splitter because of the high extinction ratio of coupling efficiency for TE versus TM-mode. In particular, the light from the optical fibre is split into two planar waveguides 25 and 26 depending on the polarisation of the light in the fibre, but in said waveguides 25 and 26 the light has the same polarisation.

When using the invention both for in-coupling and out-coupling, it is easy to make a photonic integrated circuit that is polarisation independent, as is schematically shown in FIG. 4. Photonic circuits 34 and 35 are identical and have a certain optical function (that is not polarisation independent). When connecting waveguide 25 to a photonic circuit 34 and waveguide 26 to a photonic circuit 35, and connecting the other end of the photonic circuits 34, 35 in an identical way to a second coupler device, the transmission from input fibre 31 to output fibre 36 will be independent on the polarisation of the light in the fibre 31 if the photonic circuits 34 and 35 do not convert the state of polarisation.

Although the above working principle has been explained for 2 input/output fibres, it can be extended to any number of fibres.

The invention can be fabricated by standard semiconductor processing techniques such as lithography and etching. Because in general the etch depth of the diffraction grating structures, e.g. photonic crystals, is different from the etch depth of the ridge waveguides the device may require two etch steps. In a first step the diffraction grating structures may be fabricated and in a second step the ridge waveguides, preferably together with the rest of the optical circuitry. For integrating active devices additional processing steps are required. Said diffraction grating structure, e.g. photonic crystal, is first defined in a resist layer by electron-beam lithography or optical (deep UV) lithography or interferometric lithography (for periodic structures). The diffraction grating structure, e.g. photonic crystal, pattern is then transferred into the substrate by reactive ion etching (or other anisotropic dry etching technique).

It is to be understood that although preferred embodiments, specific constructions and configurations, as well as materials, have been discussed herein for devices according to the present invention, various changes or modifications in form and detail may be made without departing from the scope of this invention as defined by the appended claims. For example, although a first preferred embodiment is described for GaAs material system, and a second embodiment is described for silicon on insulator (SOI), the invention can also be used for other materials such as InP or any other suitable material.

## Claims

1. A waveguide coupler, comprising:

   a substrate (22);
   two waveguides (wg1, wg2; 25, 26; 38, 39) formed on said substrate, and intersecting at a right angle; and
   a diffraction grating structure (50; 19; 37) formed at the intersection of said waveguides, **characterised in that** it is adapted for coupling an optical fibre (23, 31, 36) to said waveguide coupler and for receiving an optical signal from said optical fibre (23, 31, 36), said diffraction grating structure (50, 19, 37) being adapted for splitting the optical signal into a first mode and a second mode and for introducing said first mode and said second mode in separate waveguides so that both modes propagate as the first mode or as the second mode in both waveguides.

2. A waveguide coupler according to claim 1, **characterised in that** the diffraction grating structure is a 2-dimensional grating or comprises a periodic refractive index modulator.

3. A waveguide coupler according to claim 2, **characterised in that** the periodic refractive index modulator comprises an array of holes or an array of rods.

4. A waveguide coupler according to any previous claim, **characterised in that** the waveguides are ridge waveguides, and are preferably tapered.

5. A waveguide coupler according to any previous claim, further **characterised by** a slab waveguide (24) horizontally formed on said substrate and the two waveguides are formed on the slab waveguide.

6. A waveguide coupler according to claim 5, **characterised in that** said slab waveguide has a layer (20) with lower refractive index on top.

7. A waveguide coupler according to any previous claim, **characterised in that** said substrate has an additional stack of layers forming a substrate reflector under at least one of said waveguides.

8. A waveguide coupler according to claim 7, **characterised in that** the substrate reflector comprises a distributed Bragg reflector (DBR).

9. A waveguide coupler according to any previous claim, **characterised in that** said diffraction grating structure is a 2-dimensional photonic crystal with square lattice.

10. A waveguide coupler according to any previous claim, **characterised in that** the diffraction grating structure is a purely or substantially periodic grating structure.

11. A waveguide coupler according to any previous claim, **characterised in that** the diffraction grating structure is periodic and has at most 200 periods, at most 100 periods or at most 70 periods.

12. A waveguide coupler according to any previous claim, **characterised in that** the waveguides are coupled to integrated optical circuits using lateral spot-size converters.

13. A waveguide coupler according to any previous claim, **characterised in that** the optical fibre is an out-of plane fibre.

14. A waveguide coupler according to any of the previous claims, **characterised in that** the coupler couples orthogonal modes from a single-mode optical fibre into identical modes of the two waveguides.

15. A waveguide coupler according to any previous claim, **characterised in that** the optical fibre is a single-mode optical fibre.

16. A photonic integrated circuit comprising the waveguide coupler of any of claims 1 to 15.

17. A photonic integrated circuit according to claim 16, **characterised in that** the optical fibre is butt-coupled to the coupler and the optical fibre axis is perpendicular to or tilted with respect to the photonic integrated circuit.

18. A photonic integrated circuit according to any of claims 16 to 17, **characterised in that** said photonic integrated circuit furthermore comprises a waveguide coupler adapted for generating an optical output signal to an output optical fibre whereby a transmission from said received optical signal to said optical output signal is independent on the polarisation of said received optical signal.

19. A method for coupling an optical signal having a first mode and a second mode in an optical transmission element, comprising:

introducing an optical signal via an optical fibre butt-coupled to a diffraction grating structure,
splitting the optical signal into the first and the second mode on the diffraction grating structure at an intersection of a first and a second waveguides, and
introducing the first mode and the second mode in separate waveguides so that both modes propagate as the first mode or as the second mode in both waveguides.

**Patentansprüche**

1. Wellenleiterkoppler, welcher Folgendes umfasst:

   ein Substrat (22),
   zwei Wellenleiter (wl1, w12; 25, 26; 38, 39), die auf dem Substrat ausgebildet sind und einander im rechten Winkel schneiden, und
   eine an dem Schnittpunkt der Wellenleiter ausgebildete Beugungsgitterstruktur (50; 19; 37), **dadurch gekennzeichnet, dass** sie zum Koppeln einer optischen Faser (23, 31, 36) an den Wellenleiterkoppler und zum Empfangen eines optischen Signals aus der optischen Faser (23, 31, 36) ausgelegt ist, wobei die Beugungsgitterstruktur (50, 19, 37) zum Teilen des optischen Signals in eine erste Mode und eine zweite Mode und zum Einführen der ersten Mode und der zweiten Mode in separate Wellenleiter dergestalt, dass sich beide Moden in beiden Wellenleitern als die erste Mode oder als die zweite Mode ausbreiten, ausgelegt ist.

2. Wellenleiterkoppler nach Anspruch 1, **dadurch gekennzeichnet, dass** die Beugungsgitterstruktur ein zweidimensionales Gitter ist oder einen periodischen Brechungsindexmodulator umfasst.

3. Wellenleiterkoppler nach Anspruch 2, **dadurch gekennzeichnet, dass** der periodische Brechungsindexmodulator eine Lochmatrix oder eine Stabmatrix umfasst.

4. Wellenleiterkoppler nach einem der vorhergehenden Ansprüche, **dadurch gekennzeichnet, dass** die Wellenleiter Stegwellenleiter sind und bevorzugt eine Verjüngung aufweisen.

5. Wellenleiterkoppler nach einem der vorhergehenden Ansprüche, ferner **dadurch gekennzeichnet, dass** auf dem Substrat horizontal ein Schichtwellenleiter (24) ausgebildet ist und die beiden Wellenleiter auf dem Schichtwellenleiter ausgebildet sind.

6. Wellenleiterkoppler nach Anspruch 5, **dadurch gekennzeichnet, dass** der Schichtwellenleiter an der Oberseite eine Schicht (20) mit niedrigerem Brechungsindex aufweist.

7. Wellenleiterkoppler nach einem der vorhergehenden Ansprüche, **dadurch gekennzeichnet, dass** das Substrat einen zusätzlichen Schichtstapel aufweist, der unter mindestens einem der Wellenleiter einen Substratreflektor ausbildet.

8. Wellenleiterkoppler nach Anspruch 7, **dadurch gekennzeichnet, dass** der Substratreflektor einen verteilten Bragg-Reflektor (DBR, engl. "distributed Bragg reflector") umfasst.

9. Wellenleiterkoppler nach einem der vorhergehenden Ansprüche, **dadurch gekennzeichnet, dass** die Beugungsgitterstruktur ein zweidimensionaler photonischer Kristall mit quadratischem Gitter ist.

10. Wellenleiterkoppler nach einem der vorhergehenden Ansprüche, **dadurch gekennzeichnet, dass** die Beugungsgitterstruktur eine rein oder im Wesentlichen periodische Gitterstruktur ist.

11. Wellenleiterkoppler nach einem der vorhergehenden Ansprüche, **dadurch gekennzeichnet, dass** die Beugungsgitterstruktur periodisch ist und höchstens 200 Perioden, höchstens 100 Perioden oder höchstens 70 Perioden aufweist.

12. Wellenleiterkoppler nach einem der vorhergehenden Ansprüche, **dadurch gekennzeichnet, dass** die Wellenleiter unter Verwendung von Konvertern für die laterale Fleckgröße an integrierte optische Schaltungen gekoppelt sind.

13. Wellenleiterkoppler nach einem der vorhergehenden Ansprüche, **dadurch gekennzeichnet, dass** die optische Faser eine nicht in der Ebene liegende Faser (Out-of-Plane-Faser) ist.

**14.** Wellenleiterkoppler nach einem der vorhergehenden Ansprüche, **dadurch gekennzeichnet, dass** der Koppler orthogonale Moden aus einer optischen Monomodenfaser in identische Moden der beiden Wellenleiter koppelt.

**15.** Wellenleiterkoppler nach einem der vorhergehenden Ansprüche, **dadurch gekennzeichnet, dass** die optische Faser eine optische Monomodenfaser ist.

**16.** Integrierte photonische Schaltung, welche den Wellenleiterkoppler aus nach einem der Ansprüche 1 bis 15 aufweist.

**17.** Integrierte photonische Schaltung nach Anspruch 16, **dadurch gekennzeichnet, dass** die optische Faser über die Stirnfläche an den Koppler gekoppelt ist und die Achse der optischen Faser senkrecht zu der integrierten photonischen Schaltung oder gegen diese geneigt ist.

**18.** Integrierte photonische Schaltung nach einem der Ansprüche 16 bis 17, **dadurch gekennzeichnet, dass** die integrierte photonische Schaltung ferner einen Wellenleiterkoppler aufweist, der zum Generieren eines optischen Ausgangssignals an eine optische Ausgangsfaser ausgelegt ist, wodurch eine Transmission von dem empfangenen optischen Signal an das optische Ausgangssignal unabhängig von der Polarisation des empfangenen optischen Signals ist.

**19.** Verfahren zum Koppeln eines optischen Signals mit einer ersten Mode und einer zweiten Mode in ein optisches Transmissionselement, welches die folgenden Schritte umfasst:

Einführen eines optischen Signals über eine optische Faser, die über die Stirnfläche an eine Beugungsgitterstruktur gekoppelt ist,
Teilen des optischen Signals in die erste und die zweite Mode an der Beugungsgitterstruktur an einem Schnittpunkt eines ersten und eines zweiten Wellenleiters und
Einführen der ersten Mode und der zweiten Mode in separate Wellenleiter dergestalt, dass sich beide Moden in beiden Wellenleitern als die erste Mode oder als die zweite Mode ausbreiten.

**Revendications**

**1.** Coupleur de guide d'ondes, comprenant :

un substrat (22) ;
deux guides d'ondes (wg1, wg2 ; 25, 26 ; 38, 39) formés sur ledit substrat et se croisant à angle droit ; et
une structure de réseau de diffraction (50 ; 19 ; 37) formée au niveau de l'intersection desdits guides d'ondes, **caractérisé en ce qu'**il est conçu pour coupler une fibre optique (23, 31, 36) audit coupleur de guide d'ondes et pour recevoir un signal optique en provenance de ladite fibre optique (23, 31, 36), ladite structure de réseau de diffraction (50, 19, 37) étant conçue pour séparer le signal optique en un premier mode et en un second mode et pour introduire ledit premier mode et ledit second mode dans des guides d'ondes distincts de sorte que les deux modes se propagent en tant que premier mode ou en tant que second mode dans les deux guides d'ondes.

**2.** Coupleur de guide d'ondes selon la revendication 1, **caractérisé en ce que** la structure de réseau de diffraction est un sélecteur de mode bidimensionnel ou comprend un modulateur d'indice de réfraction périodique.

**3.** Coupleur de guide d'ondes selon la revendication 2, **caractérisé en ce que** le modulateur d'indice de réfraction périodique comprend un groupement de trous ou un groupement de tiges.

**4.** Coupleur de guide d'ondes selon l'une quelconque des revendications précédentes, **caractérisé en ce que** les guides d'ondes sont des guides d'ondes à moulures, et sont de préférence effilés.

**5.** Coupleur de guide d'ondes selon l'une quelconque des revendications précédentes, **caractérisé en outre par** un guide d'ondes à bloc (24) formé horizontalement sur ledit substrat et en ce que les deux guides d'ondes sont formés sur le guide d'ondes à bloc.

**6.** Coupleur de guide d'ondes selon la revendication 5, **caractérisé en ce que** ledit guide d'ondes à bloc possède une couche (20) ayant un indice de réfraction inférieur sur le dessus.

**7.** Coupleur de guide d'ondes selon l'une quelconque des revendications précédentes, **caractérisé en ce que** ledit substrat comporte un empilement supplémentaire de couches formant un réflecteur de substrat sous au moins l'un desdits guides d'ondes.

**8.** Coupleur de guide d'ondes selon la revendication 7, **caractérisé en ce que** le réflecteur de substrat comprend un réflecteur de Bragg réparti (DBR).

**9.** Coupleur de guide d'ondes selon l'une quelconque des revendications précédentes, **caractérisé en ce que** ladite structure de réseau de diffraction est un cristal photonique bidimensionnel ayant un réseau cristallin carré.

**10.** Coupleur de guide d'ondes selon l'une quelconque des revendications précédentes, **caractérisé en ce que** la structure de réseau de diffraction est une structure de sélecteur de mode purement ou sensiblement périodique.

**11.** Coupleur de guide d'ondes selon l'une quelconque des revendications précédentes, **caractérisé en ce que** la structure de réseau de diffraction est périodique et comporte au plus 200 périodes, au plus 100 périodes ou au plus 70 périodes.

**12.** Coupleur de guide d'ondes selon l'une quelconque des revendications précédentes, **caractérisé en ce que** les guides d'ondes sont reliés à des circuits optiques intégrés utilisant des convertisseurs de taille de point latérale.

**13.** Coupleur de guide d'ondes selon l'une quelconque des revendications précédentes, **caractérisé en ce que** la fibre optique est une fibre en dehors du plan.

**14.** Coupleur de guide d'ondes selon l'une quelconque des revendications précédentes, **caractérisé en ce que** le coupleur couple des modes orthogonaux provenant d'une fibre optique monomode dans des modes identiques des deux guides d'ondes.

**15.** Coupleur de guide d'ondes selon l'une quelconque des revendications précédentes, **caractérisé en ce que** la fibre optique est une fibre optique monomode.

**16.** Circuit intégré photonique comprenant le coupleur de guide d'ondes selon l'une quelconque des revendications 1 à 15.

**17.** Circuit intégré photonique selon la revendication 16, **caractérisé en ce que** la fibre optique est couplée en bout au coupleur et **en ce que** l'axe de fibre optique est perpendiculaire ou incliné par rapport au circuit intégré photonique.

**18.** Circuit intégré photonique selon l'une quelconque des revendications 16 à 17, **caractérisé en ce que** ledit circuit intégré photonique comprend en outre un coupleur de guide d'ondes conçu pour produire un signal de sortie optique vers une fibre optique de sortie de sorte qu'une transmission en provenance dudit signal optique reçu vers ledit signal de sortie optique est indépendante de la polarisation dudit signal optique reçu.

**19.** Procédé pour coupler un signal optique ayant un premier mode et un second mode dans un élément de transmission optique, comprenant :

l'introduction d'un signal optique par l'intermédiaire d'une fibre optique couplée en bout à une structure de réseau de diffraction,
la séparation du signal optique en un premier et en un second mode sur la structure de réseau de diffraction au niveau d'une intersection d'un premier et d'un second guide d'ondes, et
l'introduction du premier mode et du second mode dans des guides d'ondes distincts de sorte que les deux modes se propagent en tant que premier mode ou en tant que second mode dans les deux guides d'ondes.

FIG. 1

19

B

27

A ← → 25 27a A'

23 27b

26

28a

FIG. 2

28 { 28b

B'

23

20 24

21

22

FIG. 3

FIG. 4

wg1

wg2

FIG. 5

FIG. 6

FIG. 7

FIG. 8

## REFERENCES CITED IN THE DESCRIPTION

### Patent documents cited in the description

- EP 0738907 A
- US 6198860 B
- JP 2002062554 B
- WO 0214913 A
- US 20020008215 A1

### Non-patent literature cited in the description

- **R.M. EMMONS ; D.G. HALL.** Buried-oxide silicon-on-insulator structures: waveguide grating couplers. *IEEE J. Quantum Electron.,* January 1992, vol. 28, 164-175
- **D. TAILLAERT ; W. BOGAERTS ; P. BIENSTMAN ; T.F. KRAUSS ; P. VAN DAELE ; I. MOERMAN ; S. VERSTUYFT ; K. DE MESEL ; R. BAETS.** An out-of-plane grating coupler for efficient butt-coupling between compact planar waveguides and single-mode fibres. *IEEE J. Quantum Electron.,* July 2002, vol. 38, 949-955
- **N. ERIKSSON ; M. HAGBERG ; A. LARSSON.** Highly directional grating outcouplers with tailorable radiation characteristics. *IEEE J. Quantum Electron.,* 1996, vol. 32 (6), 1038-1047
- **D. TAILLAERT ; W. BOGAERTS ; P. BIENSTMAN ; T. KRAUSS ; I. MOERMAN ; P. VAN DAELE ; R. BAETS.** A high-efficiency out-of-plane fibre coupler for coupling to high index contrast waveguides. *Proceedings 27th European Conference on Optical Communication,* 04 October 2001, 30-31
- **E.G. NEUMANNN.** Single-mode fibres - fundamentals. Berlin Heidelberg : Springer-Verlag, 1988, vol. 5
- **J. VAN DER TOL ; J.W. PEDERSEN ; E.G. METAAL ; J. VAN GAALEN ; Y.S. OEI ; F.H. GROEN.** A short polarization splitter without metal overlays on InGaAsP-InP. *IEEE Photonics Tech. Lett.,* February 1997, vol. 9, 209-211